# EUROPEAN PATENT SPECIFICATION

(11) **EP 3 659 415 B1**
(45) Date of publication and mention of the grant of the patent: **23.12.2020**
(21) Application number: 19207698.2
(22) Date of filing: 07.11.2019
(51) Int. Cl.: A01C 3/06, B60P 1/38, B65G 23/44

(54) **VEHICLE WITH SCRAPER FLOOR CHAIN TENSIONER**
FAHRZEUG MIT KRATZBODENKETTENSPANNER
VÉHICULE DOTÉ D'UN TENDEUR DE CHAÎNE DE FOND RACLEUR

(30) Priority: 27.11.2018 DK PA201870780
(43) Date of publication of application: 03.06.2020
(73) Proprietor: Samson Agro A/S, 8800 Viborg (DK)
(72) Inventor: Thomsen, Carsten Nørlund, 8870 Langå (DK); Mejlstrup Jensen, Søren, 9500 Hobro (DK)
(74) Representative: Olesen, Birthe Bjerregaard

(56) References cited:
- EP-A1- 0 832 549
- AT-B- 368 469
- DE-U1- 8 902 422
- US-A1- 2015 024 888

## Description

### Field of the invention

The present invention concerns a vehicle, preferably an agricultural vehicle, such as a spreader for delivering spreadable materials, such as manure, comprising a truck box and a hydraulic system, comprising
- means for connecting to a hydraulic pump,
- a hydraulic motor for driving a propulsion device arranged in the bottom of the truck box, which comprises at least one bottom chain with associated idler wheels and chain tensioning device for tensioning the bottom chain through an essentially linear displacement of at least one of the idler wheels.
- one or more hydraulic cylinders, which comprise part of the chain tensioning device, and which with a piston movement in one direction causes the chain to tension, wherein the vehicle has a first operating mode, in which the bottom chain has a first direction of operation and a second operating mode, in which the bottom chain has a second direction of operation, which is counter to the first direction of operation.

Furthermore, the present invention concerns a method for the hydraulic tensioning of a chain tensioning device in a vehicle, preferably an agricultural vehicle, such as a spreader for delivering spreadable materials, such as manure, comprising a truck box and a hydraulic system, comprising
- means for connecting to a hydraulic pump
- a hydraulic motor for driving a propulsion device arranged in the bottom of the truck box, which comprises at least one bottom chain with associated idler wheels and chain tensioning device for tensioning the bottom chain through an essentially linear displacement of at least one of the idler wheels.
- one or more hydraulic cylinders, which comprise part of the chain tensioning device, and which with a piston movement in one direction causes the chain to tension, wherein the vehicle has a first operating mode, in which the bottom chain has a first direction of operation and a second operating mode, in which the bottom chain has a second direction of operation, which is counter to the first direction of operation.

### Background of the invention

With agricultural vehicles, among other vehicles, it is common to use a chain drive for various purposes. With spreaders for delivering manure, compost, mud or suchlike, it is known to use chains for propelling the material, in that bottom chains are mounted in the bottom section of a truck box, which is provided with transverse carrier elements for transporting the contents of the truck box, such as manure or suchlike, in direction of the bottom chains' movement in order to unload the contents.

The bottom chains are typically arranged along the long sides of the vehicle and are thus under great load, in that the entire contents rest above on the transverse carrier elements between the bottom chains.

Since during operation the bottom chains are exposed to wear, wherein they become slack, it is known to arrange an adjustment device for tensioning the chains by adjusting the position of one of the idler wheels connected to each bottom chain.

This adjustment device works in that the idler wheel is mounted in a longitudinal glide block in a line motion. The glide block is provided with a threaded rod with an adjustment nut, which works against a fixed buffer, wherein the position of the idler wheel in relation to the other idler wheel(s) in the chain transmission can be adjusted using
the nut. This is a relative simple and robust construction, which also makes it easy to both tighten and disassemble a bottom chain. The bottom chains can thus be manually tightened by tightening the nut in the adjustment device.

A tightening of the bottom chains at regular intervals is therefore desirable because it avoids considerable unnecessary wear. Furthermore, a worn and slack bottom chain has a negative impact on the chain transmission's effectiveness. If the bottom chain is too slack, there is also a high risk of the land wheel slipping with stoppage as a result. A slack bottom chain is also difficult to control correctly and there is therefore a high risk of the chain becoming caught and hence damaged. Agricultural vehicles, such as the above-mentioned spreaders, generally operate in highly corrosive environments and often handle very aggressive materials, which means that the bottom chains are also exposed to corrosion, which also contributes to wear and reduced durability of the chains.

The bottom chains in connection with agricultural vehicles, such as manure spreaders, beet-topping machines and transfer wagons, are mounted however in the bottom of the truck box, wherein they can be difficult to access, which can make it difficult to carry out this tightening. If there are long periods between adjustments, it is also probable that the adjustment nut rusts over, which also makes it difficult to tension the chain.

Typically, the vehicles are used intensely for short periods, after which they are stored away until the next season. This means that in practice the chains are only rarely tensioned or even not at all. What typically happens is that the bottom chain is taken off and one or more chain links removed when it becomes unacceptably slack.

From DK172309 B1 it is known that the hydraulic system already existing on the vehicle which propels the bottom chains is provided with a chain tensioning device which is activated hydraulically. Thus, a self-regulating chain tensioner is provided, which does not require regular, manual correction or adjustment of the distance between the idler wheels in the chain transmission, in that the maintenance of the chain tensioning device can maintain a given tension in the bottom chain, whereby a hydraulic cylinder pulls or pushes one of the idler wheels in the chain transmission in a direction away from the other wheels(s). The chain tensioning is provided by controlling the pressure of the oil in the cylinder and therefore the force with which the idler wheel is affected in order to establish and maintain a desired tension in the chain transmission. This continuous regulation of the bottom chain maintains an almost constant tension in such chain in order to achieve less wear and therefore a longer service life of the bottom chain.

The vehicle has however different operating modes. For example a mode for spreading the contents in the truck out onto the ground and a mode for reversing the contents in the truck.

The load on the bottom chain can vary between these two operating modes. The known vehicles therefore have disadvantages in that they do not adjust the tensioning force of the chain tensioner to the operating mode. Thus, the bottom chain can be driven in an overtensioned state.

### Purpose of the invention

The purpose of the invention is to provide a vehicle which obviates these disadvantages.

The purpose of the invention is to provide a vehicle with a self-adjusting bottom chain tensioning system in a vehicle of the type mentioned in the introduction, wherein the bottom chain is tensioned with a different tensioning force in the different operating modes.

Furthermore, the purpose of the invention is to provide a vehicle in which wear to the bottom chain is minimised.

Furthermore, the purpose of the invention to eliminate unintended operating stops and repairs.

Furthermore, the purpose of the invention is to provide a vehicle in which wear to the hydraulic cylinders is minimised.

Furthermore, the purpose of the invention is to specify a method for the hydraulic tensioning of a chain tensioning device in a vehicle, which reduces wear to the hydraulic cylinders and/or bottom chain.

### Description of the invention

This is achieved by the present invention with a vehicle of the type mentioned in the introduction, and which is described in the preamble of claim 1, which is characterised in that the hydraulic cylinders have a first effective piston area in the first operating mode, that the hydraulic cylinders have a second effective piston area in the second operating mode, and that the first and second effective piston area are different from each other.

In one operating mode, wherein the material on the truck is spread, for example, on ground, the load on the chain tensioning device will be moderate. The material is pulled directly towards the hydraulic motor. Thus, only the load of the chain itself has en effect on the chain tensioning device.

In one operating mode, wherein the direction of operation of the bottom chain is counter to the direction of operation when spreading, there will be considerably greater load on the chain tensioning device. The material is now pulled away from the hydraulic motor via the chain tensioning device, which redirects the tractive force of the hydraulic motor. Thus, the chain tensioning device is effected by both the load from the chain and the tractive force of the hydraulic motor.

The different effective piston areas are a simple way of producing different tensioning forces in the chain tensioning device in the first and second operating mode.

The adjusted and different tensioning forces in the first and second operating mode reduce wear to the bottom chain and hydraulic cylinders in relation to use of the same tensioning force in the first and second operating mode.

No special pressure regulation is required for the chain tensioning device. A pressure regulation can be used for both chain drive and the chain tensioning device. This achieves a robust system requiring minimal service.

Activation of the first and second effective piston area in the different operating modes is provided by changing the direction of flow in the hydraulic system. A change in the direction of flow can be provided by using a diversion valve.

The pump in the hydraulic system can be mounted on the vehicle itself. In this case, the pump can be driven, for example, by a drive shaft, which is connected to a tractor.

The hydraulic system comprises means for connection to the hydraulic pump. This will be means in the form of a hydraulic cable on the outlet side and a hydraulic cable on the return side. Generally, an oil reservoir will also be provided, to which the return oil is fed and from which the hydraulic oil is supplied to the suction side of the hydraulic pump.

The hydraulic pump and oil reservoir will generally be placed on a tractor that pulls the vehicle but can alternatively be mounted on the vehicle and driven by a PTO shaft or an off-road heavy goods vehicle.

In one operating mode the tensioning force can be, for example, between 30 and 200 bar, preferably between 50 and 180 bar, more preferably 135 bar.

With this, the high pressures which can be experienced in known systems, wherein the tensioning force can be more than 200 bar and typically can be between 300 and 400 bar, are avoided.

The vehicle can be a manure spreader.

In a further embodiment provided by the invention the vehicle is characterised in that the hydraulic cylinders are double-acting cylinders.

The double-acting cylinders make it possible for the chain tensioning device to be provided on the vehicle in a space-saving manner. Thus, the chain tensioning device can be used in vehicles with compact construction.

The double-acting cylinders can be double-acting cylinders with two chambers. One of the chambers can be driven as a single-acting cylinder.

In a further embodiment provided by the invention the vehicle is characterised in that the first and second effective piston area is provided by activation of a different number of single-acting cylinders.

In a further embodiment provided by the invention the vehicle is characterised in that the hydraulic cylinders are mounted in parallel.

In a further embodiment provided by the invention the vehicle is characterised in that a diversion valve is mounted between the hydraulic cylinders and the hydraulic pump, which reverses the direction of flow in the hydraulic system.

The diversion valve provides activation of the first and second effective piston area by reversing the direction of flow in the hydraulic system. At the same time, the direction of operation is controlled by the bottom chain with the diversion valve. Thus, it is always ensured that the chain tensioning pressure is adjusted to the direction of operation of the bottom chain and therefore the operating mode of the vehicle.

In a further embodiment provided by the invention the vehicle is characterised in that a changeover valve is mounted between the selector valve and overpressure valve.

The changeover valve comprises two inputs and one output. The changeover valve's inputs are connected to the selector valve, and the changeover valve's output is connected to the overpressure valve.

The changeover valve works together with the diversion valve and provides activation of the first and second effective piston area.

In a further embodiment provided by the invention the vehicle is characterised in that a return valve and an overpressure valve are mounted between the hydraulic cylinders and the hydraulic pump in parallel between at least some of the hydraulic cylinders and hydraulic pump.

A return valve and an overpressure valve maintain a minimum pressure in the chain tensioning device. Thus, a minimum pressure will always be maintained between the applicable hydraulic cylinders and hydraulic pump.

At the start of reversing, the pressure in the vehicle's hydraulic system can briefly rise. Thus, the tensioning force in the chain tensioning device will be increased. If the vehicle comprises only one return valve, the chain tensioning device will subsequently be maintained at too high a pressure. The overpressure valve ensures that the pressure in the hydraulic cylinders can fall again. Thus, the overpressure valve obviates overtensioning of the chain tensioning device which can occur during pressure peaks at the start of reversing. Thus, wear to the bottom chain and hydraulic cylinders is reduced.

A further aspect of the invention is a method for the hydraulic tensioning of the chain tensioning device in a vehicle, preferably an agricultural vehicle, such as a spreader for delivering spreadable materials, such as manure, comprising a truck box and a hydraulic system, comprising
- a hydraulic pump,
- a hydraulic motor for driving a propulsion device arranged in the bottom of the truck box, which comprises at least one bottom chain with associated idler wheels and chain tensioning device for tensioning the bottom chain through an essentially linear displacement of at least one of the idler wheels.
- one or more hydraulic cylinders, which comprise part of the chain tensioning device, and which with a piston movement in one direction causes the chain to tension, wherein the vehicle has a first operating mode, in which the bottom chain has a first direction of operation and a second operating mode, in which the bottom chain has a second direction of operation, which is counter to the first direction of operation, which is characterised in,
that the method comprises the steps, wherein:
- a first tensioning force is provided in the chain tensioning device with a first effective piston area of the hydraulic cylinders in the first operating mode,
- a second tensioning force is provided in the chain tensioning device with a second effective piston area, which is different from the first effective piston area, in the second operating mode,

The method can be used with either embodiment of the vehicle described in the present application.

In a further aspect of the invention, the method is characterised in that the further aspect comprises the following steps wherein:
- the direction of flow in the hydraulic system is reversed.

The reversing of the direction of flow can produce activation of the first and/or the second effective piston area.

The reversing of the direction of flow can provide a change in the direction of operation of the bottom chain.

The reversing of the direction of flow can be provided with a diversion valve.

In a further embodiment provided by the invention the method is characterised in that the first and second effective piston area is provided using one or more double-acting hydraulic cylinders.

The double-acting hydraulic cylinders are space-saving. Thus, the method can be used in vehicles where there are space restrictions for the hydraulic cylinders and/or chain tensioning device.

In a further aspect of the invention, the method is characterised in that the further aspect comprises the following steps wherein:
- a minimum pressure is maintained in the chain tensioning device in all operating modes.

Maintaining the minimum pressure in the chain tensioning device excludes the possibility of driving the bottom chain at too low a chain tensioning pressure, should the pressure in the hydraulic system fall below the minimum pressure when in operation. Thus, wear to the bottom chain is reduced.

The minimum pressure can be provided with the return valve and overpressure valve, which are connected in parallel, between the pump and at least some of the hydraulic cylinders.

### Drawing description

The invention will be explained in more detail below with reference to the appended drawings where
- Fig. 1: shows a side view of a vehicle provided by prior art,
- Fig. 1a: is a slice of fig. 1, which shows the chain tensioning device which the figure shown in fig. 1 is provided with,
- Fig. 2: shows a hydraulic diagram of an embodiment provided by the invention of a hydraulic system,
- Fig. 2a: shows a schematic representation of the first effective piston area for figure 2,
- Fig. 3: shows a hydraulic diagram of the hydraulic system shown in fig. 2 with reversed flow,
- Fig. 3a: shows a schematic representation of the second effective piston area for figure 3,
- Fig. 4: shows a hydraulic diagram of a further embodiment provided by the invention of a hydraulic system,
- Fig. 4a: shows a schematic representation of the first effective piston area for figure 4,
- Fig. 5: shows a hydraulic diagram of the hydraulic system shown in fig. 4 with reversed flow,
- Fig. 5a: shows a schematic representation of the second effective piston area for figure 5,
- Fig. 6: shows a hydraulic diagram of a further embodiment provided by the invention of a hydraulic system,
- Fig. 6a: shows a schematic representation of the first effective piston area for figure 6,
- Fig. 7: shows a hydraulic diagram of the hydraulic system shown in fig. 6 with reversed flow,
- Fig. 7a: shows a schematic representation of the second effective piston area for figure 7,
- Fig. 8: shows a hydraulic diagram of a further embodiment provided by the invention of a hydraulic system,
- Fig. 8a: shows a schematic representation of the first effective piston area for figure 8,
- Fig. 9: shows a hydraulic diagram of the hydraulic system shown in fig. 8 with reversed flow, and
- Fig. 9a: shows a schematic representation of the second effective piston area for figure 9.

In the following description identical or equivalent elements will be marked with the same reference drawing in the various figures. Thus there will not be given an explanation for all details in connection with each individual figure/embodiment.

### Detailed description of the Invention

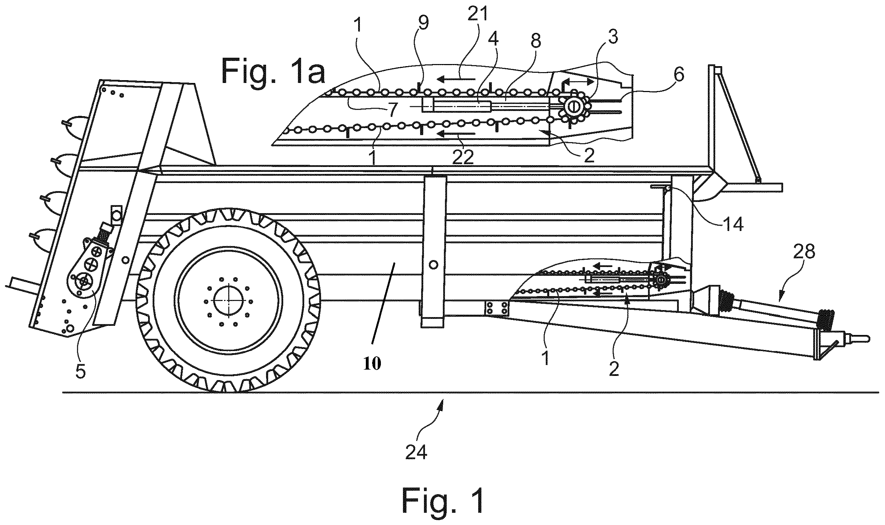

Fig. 1 shows a vehicle 24 provided by the invention in the form of a spreader for delivering spreadable materials, such as manure and suchlike, wherein the bottom chains 1 are arranged next to each other in the bottom of the truck box and are provided with transverse carrier elements 9. The bottom chains 1 are also provided with a chain tensioning device 2 for tensioning the bottom chains 1. The bottom chains 1 are driven by a hydraulic motor 5, which is connected to a sprocket (not shown), which the bottom chains 1 in the end of the propulsion device is engaged with, which sprocket is housed in the bottom of the truck box or in the vehicle's chassis 7. In the other end of the propulsion device is each of the bottom chains 1 are engaged around an idler wheel 3, which is mounted on the chain tensioning device 2, which is again attached to the truck box or in the vehicle's chassis 7.

The bottom chain 1 has a first direction of operation 21 and a second direction of operation 22. The first direction of operation 21 is used for unloading / spreading the material on the truck. The second direction of operation 22 is used for reversing the material on the truck.

The chain tensioning device 2, which is shown in more detail in fig. 1a, can displace the idler wheel 3 in a link motion 6 in a direction parallel to the bottom chain's direction of propulsion. As shown in fig. 1a, the chain tensioning device 2 comprises a number of hydraulic cylinders 4, which with the cylinder housing is attached to chassis 7 or the bottom plate in the truck box.

The hydraulic cylinders 4 are arranged in a cylinder control 8, which shows individual routes for the hydraulic cylinders' pistons, such that the cylinders 4 will push the control 8 away from the mounting in the chassis/bottom plate 7, wherein the idler wheels 3, which are arranged on the cylinder control 8, are thus displaced linearly in their line motion 6.

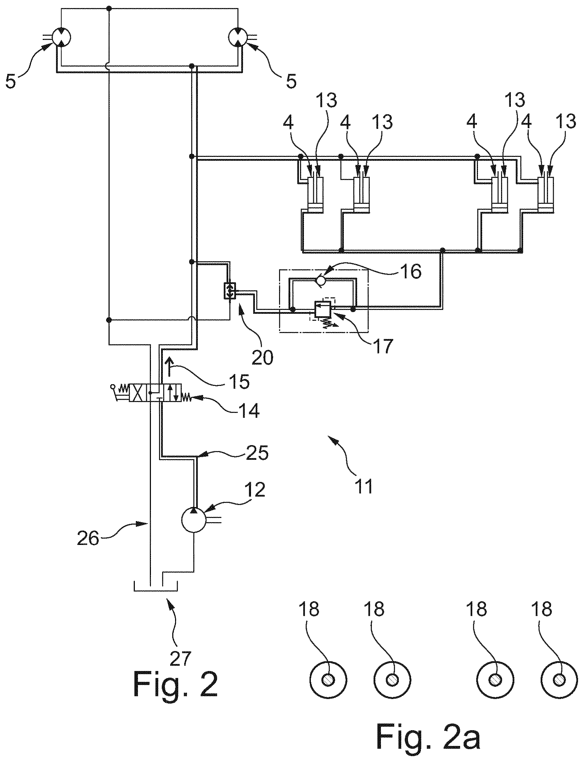

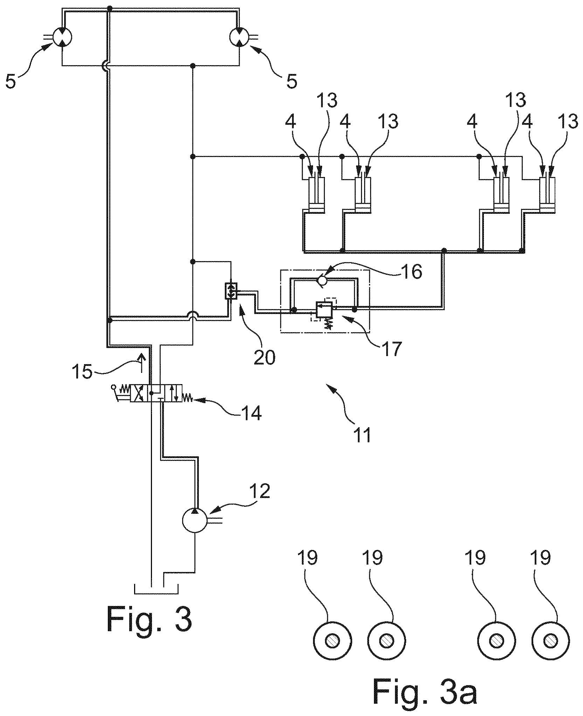

Fig. 2 and 3 show a diagram of an embodiment provided by the invention of a hydraulic system 11, which is built into a vehicle according to figure 1.

The outlet side of the hydraulic system 11 is marked with a thicker line.

A hydraulic pump 12 drives one or more hydraulic motors 5 and hydraulic cylinders 4 in the chain tensioning device 2.

The hydraulic system 11 is connected to the hydraulic pump 12 via a hydraulic cable 25 on the outlet side and a hydraulic cable 26 on the return side. Generally, an oil reservoir 27 will also be provided, to which the return oil is fed and from which the hydraulic oil is supplied to the suction side of the hydraulic pump 12.

The hydraulic pump and oil reservoir will generally be placed on a tractor that pulls the vehicle but can alternatively be mounted on the vehicle 24 and driven by a PTO shaft 28 (see Fig. 1).

The hydraulic cylinders 4 are double-acting cylinders 13.

The hydraulic cylinders 4 are mounted in parallel.

A diversion valve 14 is mounted between the hydraulic cylinders 4 and the hydraulic pump 12. The diversion valve 14 can reverse the direction of flow 15 in the hydraulic system 11.

A return valve 16 and an overpressure valve 17 are mounted in parallel between the hydraulic cylinders 4 and the hydraulic pump 12. In other words, the valves 16, 17 are mounted between the hydraulic pump 12 and one side of the double-acting cylinders 13.

A changeover valve 20 is mounted between the selector valve 14 and the overpressure valve 17. The changeover valve 20 comprises two inputs and one output. The changeover valve's inputs are connected to the selector valve 14, and the changeover valve's output is connected to the overpressure valve 17.

In figure 2 the diversion valve is in a position wherein the direction of flow 15 is not reversed. Therefore, the vehicle is in a first operating mode wherein the bottom chain (not shown) is in a first direction of operation. For example for spreading material on the truck.

Both sides of the double-acting cylinders are pressurised. Figure 2a shows in schematic form the first effective piston area 18, which is the total hatched area for the four hydraulic cylinders in the system.

In figure 3 the diversion valve is in a position wherein the direction of flow 15 is reversed. Therefore, the vehicle is in a second operating mode wherein the bottom chain (not shown) is in a second direction of operation. For example for reversing material on the truck.

One side of the double-acting cylinders 13 is pressurised. Figure 3a shows in schematic form the second effective piston area 19, which is the total hatched area for the four hydraulic cylinders 4 in the system.

The method for the hydraulic tensioning of a chain tensioning device in the vehicle 24 comprises the following steps, wherein:
- a first tensioning force is provided in the chain tensioning device 2 with a first effective piston area of the hydraulic cylinders in the first operating mode. This is shown in figure 2.
- a second tensioning force is provided in the chain tensioning device with a second effective piston area, which is different from the first effective piston area, in the second operating mode, This is shown in figure 3.

The method can be used with either embodiment of the vehicle described in the present application.

The method can further comprise that:
- the direction of flow in the hydraulic system is reversed.

The reversing of the direction of flow can produce activation of the first and/or the second effective piston area. Figure 3 shows a reversed direction of flow in relation to figure 2. Figure 2 shows the system in a first operating mode, wherein the first effective piston area is activated and figure 3 shows a second operating mode, wherein the second effective piston area is activated.

The reversing of the direction of flow provides a change in the direction of operation of the bottom chain.

The reversing of the direction of flow is provided with a diversion valve (14).

In a further embodiment provided by the invention the method is characterised in that the first and second effective piston area is provided using one or more double-acting hydraulic cylinders.

The double-acting hydraulic cylinders are space-saving. Thus, the method can be used in vehicles where there are space restrictions for the hydraulic cylinders and/or chain tensioning device.

In a further aspect of the invention, the method is characterised in that the further aspect comprises the following steps wherein:
- a minimum pressure is maintained in the chain tensioning device in all operating modes.

Maintaining the minimum pressure in the chain tensioning device excludes the possibility of driving the bottom chain at too low a chain tensioning pressure, should the pressure in the hydraulic system fall below the minimum pressure when in operation. Thus, wear to the bottom chain is reduced.

The minimum pressure can be provided with the return valve and overpressure valve, which are connected in parallel, between the pump and at least some of the hydraulic cylinders.

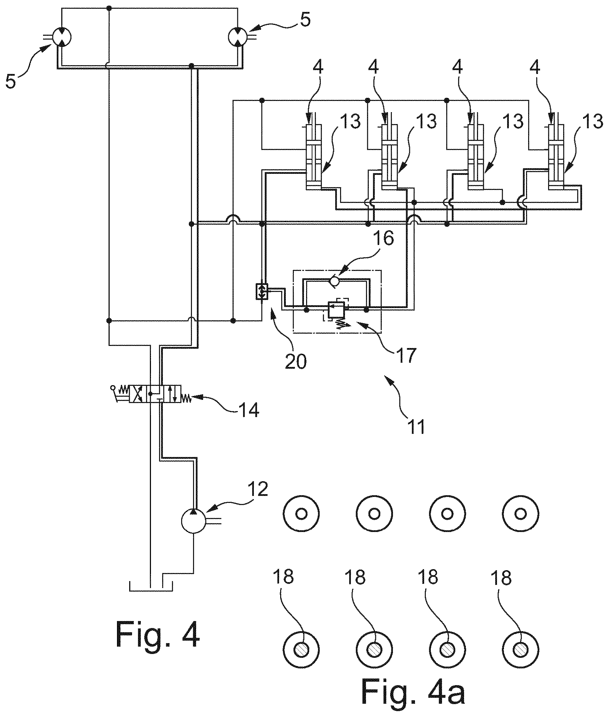

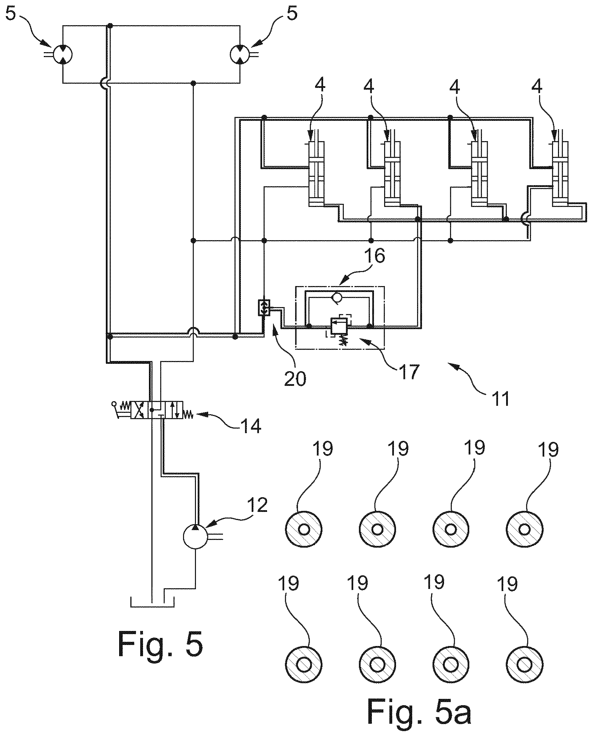

Fig. 4 and 5 show a diagram of a further embodiment provided by the invention of a hydraulic system 11, which is built into a vehicle according to figure 1.

The outlet side of the hydraulic system 11 is marked with a thicker line.

A hydraulic pump 12 drives one or more hydraulic motors 5 and hydraulic cylinders 4 in the chain tensioning device 2.

The hydraulic cylinders 4 are mounted in parallel.

The hydraulic cylinders 4 are double-acting cylinders 13 with two chambers. One chamber is driven double-acting and one chamber is driven single-acting.

A diversion valve 14 is mounted between the hydraulic cylinders 4 and the hydraulic pump 12. The diversion valve 14 can reverse the direction of flow 15 in the hydraulic system 11.

A return valve 16 and an overpressure valve 17 are mounted in parallel between the hydraulic cylinders 4 and the hydraulic pump 12. In other words, the valves 16, 17 are mounted between the hydraulic pump 12 and one side of the first chamber of the double-acting cylinders 13.

A changeover valve 20 is mounted between the selector valve 14 and the overpressure valve 17. The changeover valve 20 comprises two inputs and one output. The changeover valve's inputs are connected to the selector valve 14, and the changeover valve's output is connected to the overpressure valve 17.

In figure 4 the diversion valve is in a position wherein the direction of flow 15 is not reversed. Therefore, the vehicle is in a first operating mode wherein the bottom chain (not shown) is in a first direction of operation. For example for spreading material on the truck.

Both sides of the first chamber of the double-acting cylinders 13 are pressurised. The second chamber is not pressurised. Figure 4a shows in schematic form the first effective piston area 18, which is the total hatched area for the four hydraulic cylinders in the system.

In figure 5 the diversion valve is in a position wherein the direction of flow 15 is reversed. Therefore, the vehicle is in a second operating mode wherein the bottom chain (not shown) is in a second direction of operation. For example for reversing material on the truck.

One side of the first and second chamber of the double-acting cylinders 13 is pressurised. Figure 5a shows in schematic form the second effective piston area 19, which is the total hatched area for the four hydraulic cylinders 4 in the system.

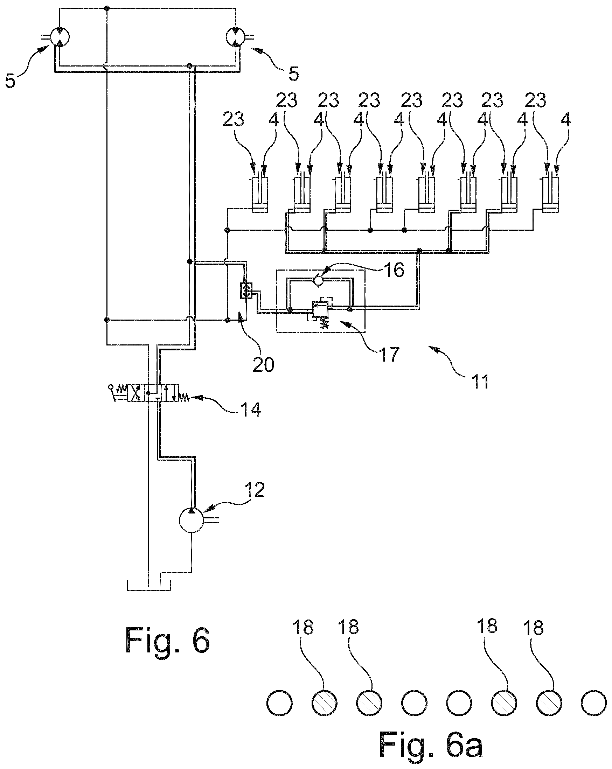

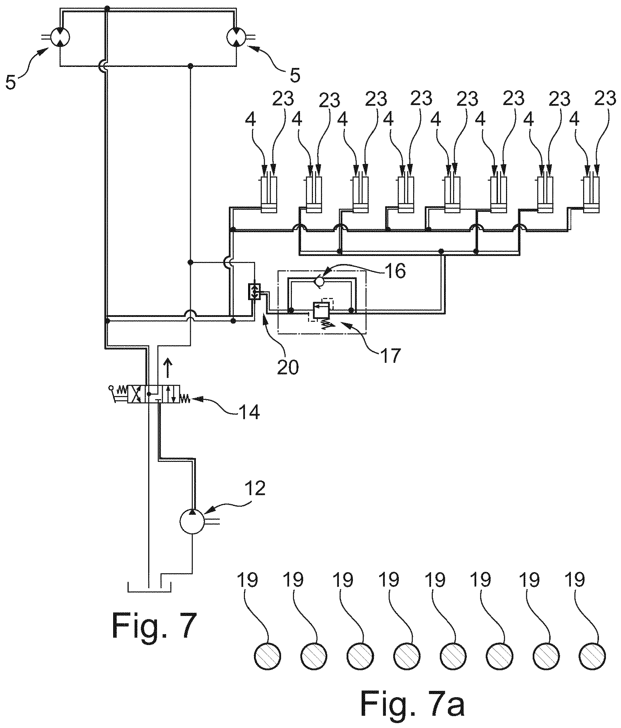

Fig. 6 and 7 show a diagram of a further embodiment provided by the invention of a hydraulic system 11, which is built into a vehicle according to figure 1.

The outlet side of the hydraulic system 11 is marked with a thicker line.

A hydraulic pump 12 drives one or more hydraulic motors 5 and hydraulic cylinders 4 in the chain tensioning device 2.

The hydraulic cylinders 4 are mounted in parallel.

The hydraulic cylinders 4 are single-acting cylinders 23.

A diversion valve 14 is mounted between the hydraulic cylinders 4 and the hydraulic pump 12. The diversion valve 14 can reverse the direction of flow 15 in the hydraulic system 11.

A return valve 16 and an overpressure valve 17 are mounted in parallel between some of the hydraulic cylinders 4 and the hydraulic pump 12.

A changeover valve 20 is mounted between the selector valve 14 and the overpressure valve 17. The changeover valve 20 comprises two inputs and one output. The changeover valve's inputs are connected to the selector valve 14, and the changeover valve's output is connected to the overpressure valve 17.

In figure 6 the diversion valve is in a position wherein the direction of flow 15 is not reversed. Therefore, the vehicle is in a first operating mode wherein the bottom chain (not shown) is in a first direction of operation. For example for spreading material on the truck.

Some of the hydraulic cylinders are pressurised. Figure 6a shows in schematic form the first effective piston area 18, which is the total hatched area for the four hydraulic cylinders 4 in the system, which is pressurised.

In figure 7 the diversion valve is in a position wherein the direction of flow 15 is reversed. Therefore, the vehicle is in a second operating mode wherein the bottom chain (not shown) is in a second direction of operation. For example for reversing material on the truck.

All hydraulic cylinders 4 are pressurised. Figure 7a shows in schematic form the second effective piston area 19, which is the total hatched area for the 8 pressurised hydraulic cylinders 4 in the system.

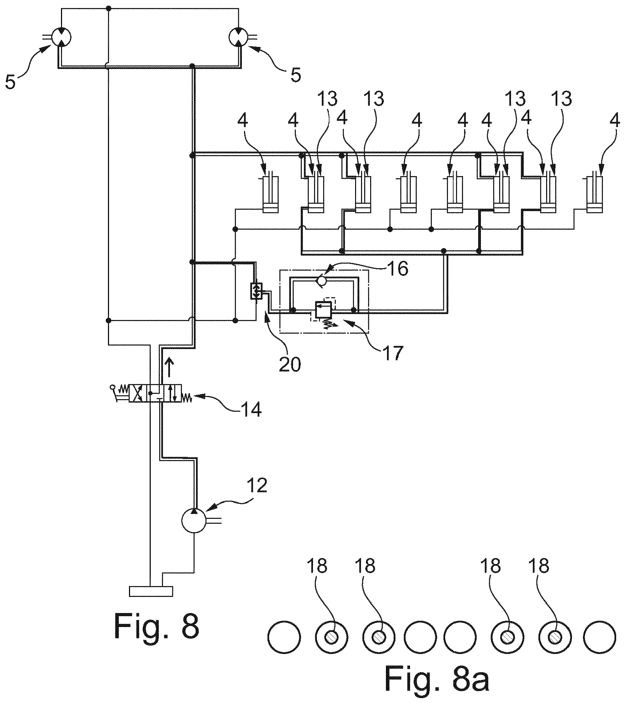

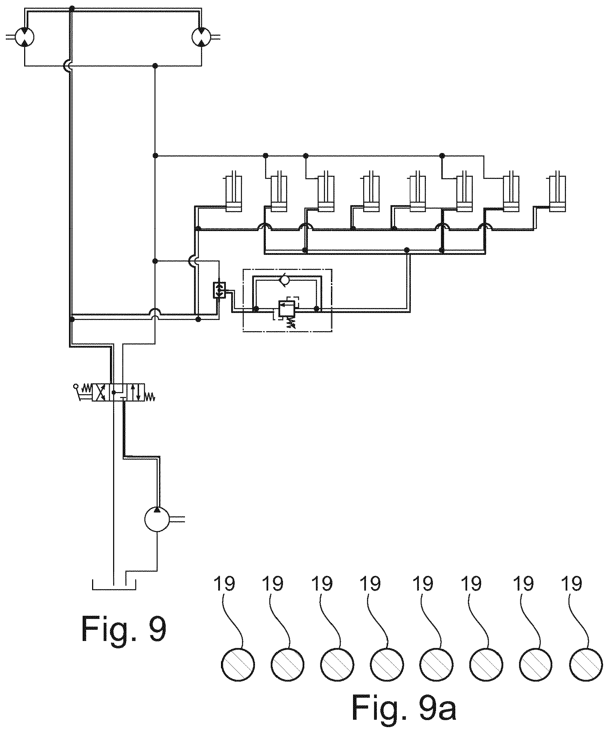

Fig. 8 and 9 show a diagram of a further embodiment provided by the invention of a hydraulic system 11, which is built into a vehicle according to figure 1.

The outlet side of the hydraulic system 11 is marked with a thicker line.

A hydraulic pump 12 drives one or more hydraulic motors 5 and hydraulic cylinders 4 in the chain tensioning device 2.

The hydraulic cylinders 4 are mounted in parallel.

Some of the hydraulic cylinders 4 are double-acting cylinders 13.

A diversion valve 14 is mounted between the hydraulic cylinders 4 and the hydraulic pump 12. The diversion valve 14 can reverse the direction of flow 15 in the hydraulic system 11.

A return valve 16 and an overpressure valve 17 are mounted in parallel between some of the hydraulic cylinders 4 and the hydraulic pump 12.

A changeover valve 20 is mounted between the selector valve 14 and the overpressure valve 17. The changeover valve 20 comprises two inputs and one output. The changeover valve's inputs are connected to the selector valve 14, and the changeover valve's output is connected to the overpressure valve 17.

In figure 8 the diversion valve is in a position wherein the direction of flow 15 is not reversed. Therefore, the vehicle is in a first operating mode wherein the bottom chain (not shown) is in a first direction of operation. For example for spreading material on the truck.

Some of the hydraulic cylinders are pressurised. Both sides of the double-acting cylinders 13 are pressurised. Figure 8a shows in schematic form the first effective piston area 18, which is the total hatched area for the four hydraulic cylinders 4 in the system, which is pressurised.

In figure 9 the diversion valve is in a position wherein the direction of flow 15 is reversed. Therefore, the vehicle is in a second operating mode wherein the bottom chain (not shown) is in a second direction of operation. For example for reversing material on the truck.

All hydraulic cylinders 4 are pressurised. Figure 9a shows in schematic form the second effective piston area 19, which is the total hatched area for the 8 pressurised hydraulic cylinders 4 in the system.

### List of reference drawings

- 1: Bottom chain
- 2: Chain tensioning device
- 3: Idler wheel
- 4: Hydraulic cylinders
- 5: Hydraulic motor
- 6: Link motion
- 7: Chassis
- 8: Cylinder control
- 9: Carrier elements
- 10: Truck box
- 11: Hydraulic system
- 12: Hydraulic pump
- 13: Double-acting cylinder
- 14: Diversion valve
- 15: Direction of flow
- 16: Return valve
- 17: Overpressure valve
- 18: First effective piston area
- 19: Second effective piston area
- 20: Changeover valve
- 21: First direction of operation
- 22: Second direction of operation
- 23: Single-acting hydraulic cylinder
- 24: Vehicle
- 25: Hydraulic cable on the outlet side
- 26: Hydraulic cable on the return side
- 27: Oil reservoir
- 28: PTO shaft

## Claims

1. Vehicle (24), preferably an agricultural vehicle, such as a spreader for delivering spreadable materials, such as manure, comprising a truck box (10) and a hydraulic system (11), comprising
- means for connecting to a hydraulic pump (12),
- a hydraulic motor (5) for driving a propulsion device arranged in the bottom of the truck box (10), which comprises at least one bottom chain (1) with associated idler wheels (3) and chain tensioning device (2) for tensioning the bottom chain (1) through an essentially linear displacement of at least one of the idler wheels (3),
- one or more hydraulic cylinders (4), which form part of the chain tensioning device (2), and which with a piston movement in one direction causes the chain to tension, wherein the vehicle (24) has a first operating mode, in which the bottom chain (1) has a first direction of operation (21) and a second operating mode, in which the bottom chain (1) has a second direction of operation (22), which is counter to the first direction of operation (21),
**characterised in that,**
the hydraulic cylinders (4) have a first effective piston area (18) in the first operating mode,
the hydraulic cylinders (4) have a second effective piston area (19) in the second operating mode, and that the first (18) and second effective piston area (19) are different from each other.

2. Vehicle (24) according to claim 1, **characterised in, that** the hydraulic cylinders (4) are double-acting cylinders (13).

3. Vehicle (24) according to claim 1, **characterised in, that** the first (18) and second effective piston area (19) is provided by activation of a different number of single-acting hydraulic cylinders (23).

4. Vehicle (24) according to any of the previous claims, **characterised in, that** the hydraulic cylinders (4) are mounted in parallel.

5. Vehicle (24) according to any of the previous claims, **characterised in, that** a diversion valve (14) is mounted between the hydraulic cylinders (4) and the hydraulic pump (12), which reverses the direction of flow (15) in the hydraulic system (11).

6. Vehicle (24) according to any of the previous claims, **characterised in, that** a return valve (16) and an overpressure valve (17) are mounted between the hydraulic cylinders (4) and the hydraulic pump (12) in parallel between at least some of the hydraulic cylinders (4) and the hydraulic pump (12).

7. Method for the hydraulic tensioning of a chain tensioner (2) in a vehicle (24), preferably an agricultural vehicle, such as a spreader for delivering spreadable materials, such as manure, comprising a truck box (10) and a hydraulic system (11), comprising
- means for connecting to a hydraulic pump (12),
- a hydraulic motor (5) for driving a propulsion device arranged in the bottom of the truck box (10), which comprises at least one bottom chain (1) with associated idler wheels (3) and chain tensioning device (2) for tensioning the bottom chain (1) through an essentially linear displacement of at least one of the idler wheels (3).
- one or more hydraulic cylinders (4), which comprise part of the chain tensioning device (2), and which with a piston movement in one direction causes the chain to tension, wherein the vehicle (24) has a first operating mode, in which the bottom chain (1) has a first direction of operation (21) and a second operating mode, in which the bottom chain (1) has a second direction of operation (22), which is counter to the first direction of operation (21),
**characterised in that,**
that the method comprises the steps, wherein:
- a first tensioning force is provided in the chain tensioning device (2) with a first effective piston area (18) of the hydraulic cylinders (4) in the first operating mode,
- a second tensioning force is provided in the chain tensioner (2) with a second effective piston area (19), which is different from the first effective piston area (18), in the second operating mode,

8. Method according to claim 7, **characterised in, that** the further method comprises the following steps wherein:
- reversing the direction of flow (15) in the hydraulic system (11).

9. Method according to any of the previous claims 7 to 8, **characterised in, that** the first (18) and second effective piston area (19) are provided using one or more double-acting hydraulic cylinders (13).

10. Method according to any of the previous claims 7 to 9, **characterised in, that** the further method comprises the following steps wherein:
- a minimum pressure is maintained in the chain tensioning device (2) in all operating modes.

## Patentansprüche

1. Fahrzeug (24), bevorzugt ein landwirtschaftliches Fahrzeug, wie zum Beispiel ein Streuer zum Abgeben von streubaren Materialien, wie zum Beispiel Gülle, umfassend einen Anhängerkasten (10) und ein Hydrauliksystem (11), umfassend
- Mittel zum Verbinden mit einer Hydraulikpumpe (12),
- einen Hydraulikmotor (5) zum Antreiben einer Antriebsvorrichtung, die in dem Boden des Anhängerkastens (10) angeordnet ist, der zumindest eine Bodenkette (1) mit verbundenen Leerlaufrädern (3) und Kettenspannvorrichtung (2) zum Spannen der Bodenkette (1) durch eine im Wesentlichen lineare Verschiebung von zumindest einem der Leerlaufräder (3) umfasst,
- einen oder mehrere Hydraulikzylinder (4), die Teil der Kettenspannvorrichtung (2) bilden, und mit denen eine Kolbenbewegung in einer Richtung bewirkt, dass sich die Kette spannt, wobei das Fahrzeug (24) einen ersten Betriebsmodus, in dem die Bodenkette (1) eine erste Betriebsrichtung (21) aufweist, und einen zweiten Betriebsmodus aufweist, in dem die Bodenkette (1) eine zweite Betriebsrichtung (22) aufweist, die entgegengesetzt zu der ersten Betriebsrichtung (21) ist, **dadurch gekennzeichnet, dass**
die Hydraulikzylinder (4) einen ersten wirksamen Kolbenbereich (18) in dem ersten Betriebsmodus aufweisen,
die Hydraulikzylinder (4) einen zweiten wirksamen Kolbenbereich (19) in dem zweiten Betriebsmodus aufweisen, und dass sich der erste (18) und der zweite wirksame Kolbenbereich (19) voneinander unterscheiden.

2. Fahrzeug (24) nach Anspruch 1, **dadurch gekennzeichnet, dass** die Hydraulikzylinder (4) doppelt wirkende Zylinder (13) sind.

3. Fahrzeug (24) nach Anspruch 1, **dadurch gekennzeichnet, dass** der erste (18) und der zweite wirksame Kolbenbereich (19) durch Aktivierung einer unterschiedlichen Anzahl an einzeln wirkenden Hydraulikzylindern (23) bereitgestellt werden.

4. Fahrzeug (24) nach einem der vorhergehenden Ansprüche, **dadurch gekennzeichnet, dass** die Hydraulikzylinder (4) parallel montiert sind.

5. Fahrzeug (24) nach einem der vorhergehenden Ansprüche, **dadurch gekennzeichnet, dass** ein Umschaltventil (14) zwischen den Hydraulikzylindern (4) und der Hydraulikpumpe (12) montiert ist, das die Flussrichtung (15) in dem Hydrauliksystem (11) umkehrt.

6. Fahrzeug (24) nach einem der vorhergehenden Ansprüche, **dadurch gekennzeichnet, dass** ein Rückschlagventil (16) und ein Überdruckventil (17) zwischen den Hydraulikzylindern (4) und der Hydraulikpumpe (12) parallel zwischen zumindest einigen der Hydraulikzylinder (4) und der Hydraulikpumpe (12) montiert sind.

7. Verfahren für die hydraulische Spannung eines Kettenspanners (2) in einem Fahrzeug (24), bevorzugt einem landwirtschaftlichen Fahrzeug, wie zum Beispiel einem Streuer zum Abgeben von streubaren Materialien, wie zum Beispiel Gülle, umfassend einen Anhängerkasten (10) und ein Hydrauliksystem (11), umfassend
- Mittel zum Verbinden mit einer Hydraulikpumpe (12),
- einen Hydraulikmotor (5) zum Antreiben einer Antriebsvorrichtung, die in dem Boden des Anhängerkastens (10) angeordnet ist, der zumindest eine Bodenkette (1) mit verbundenen Leerlaufrädern (3) und Kettenspannvorrichtung (2) zum Spannen der Bodenkette (1) durch eine im Wesentlichen lineare Verschiebung von zumindest einem der Leerlaufräder (3) umfasst.
- einen oder mehrere Hydraulikzylinder (4), die Teil der Kettenspannvorrichtung (2) umfassen, und mit denen eine Kolbenbewegung in einer Richtung bewirkt, dass sich die Kette spannt, wobei das Fahrzeug (24) einen ersten Betriebsmodus, in dem die Bodenkette (1) eine erste Betriebsrichtung (21) aufweist, und einen zweiten Betriebsmodus aufweist, in dem die Bodenkette (1) eine zweite Betriebsrichtung (22) aufweist, die entgegengesetzt zu der ersten Betriebsrichtung (21) ist, **dadurch gekennzeichnet, dass**
das Verfahren die folgenden Schritte umfasst, wobei:
- eine erste Spannkraft in der Kettenspannvorrichtung (2) mit einem ersten wirksamen Kolbenbereich (18) der Hydraulikzylinder (4) in dem ersten Betriebsmodus bereitgestellt wird,
- eine zweite Spannkraft in dem Kettenspanner (2) mit einem zweiten wirksamen Kolbenbereich (19), der sich von dem ersten wirksamen Kolbenbereich (18) unterscheidet, in dem zweiten Betriebsmodus bereitgestellt wird,

8. Verfahren nach Anspruch 7, **dadurch gekennzeichnet, dass** das weitere Verfahren die folgenden Schritte umfasst, wobei:
- die Flussrichtung (15) in dem Hydrauliksystem (11) umgekehrt wird.

9. Verfahren nach einem der vorhergehenden Ansprüche 7 bis 8, **dadurch gekennzeichnet, dass** der erste (18) und der zweite wirksame Kolbenbereich (19) unter Verwendung von einem oder mehreren doppelt wirkenden Hydraulikzylindern (13) bereitgestellt werden.

10. Verfahren nach einem der vorhergehenden Ansprüche 7 bis 9, **dadurch gekennzeichnet, dass** das weitere Verfahren die folgenden Schritte umfasst, wobei:
- ein Mindestdruck in der Kettenspannvorrichtung (2) in allen Betriebsmodi gehalten wird.

## Revendications

1. Véhicule (24), de préférence un véhicule agricole, tel qu'une épandeuse pour distribuer des matières épandables, telles que du fumier, comprenant une benne de camion (10) et un système hydraulique (11), comprenant
- des moyens destinés à être connectés à une pompe hydraulique (12),
- un moteur hydraulique (5) pour entraîner un dispositif de propulsion agencé au fond de la benne de camion (10), qui comprend au moins une chaîne de fond (1) avec des galets-tendeurs associés (3) et un dispositif de tension de chaîne (2) pour tendre la chaîne de fond (1) par l'intermédiaire d'un déplacement principalement linéaire d'au moins l'un des galets-tendeurs (3),
- un ou plusieurs vérins hydrauliques (4), qui font partie du dispositif de tension de chaîne (2), et qui avec un mouvement de piston dans une direction amènent la chaîne à se tendre, dans lequel le véhicule (24) a un premier mode de fonctionnement, dans lequel la chaîne de fond (1) a une première direction de fonctionnement (21) et un second mode de fonctionnement, dans lequel la chaîne de fond (1) a une seconde direction de fonctionnement (22), qui est contraire à la première direction de fonctionnement (21),
**caractérisé en ce que**,
les vérins hydrauliques (4) ont une première zone de piston active (18) dans le premier mode de fonctionnement,
les vérins hydrauliques (4) ont une seconde zone de piston active (19) dans le second mode de fonctionnement, et **en ce que** la première zone de piston active (18) et la seconde zone de piston active (19) sont différentes l'une de l'autre.

2. Véhicule (24) selon la revendication 1, **caractérisé en ce que**, les vérins hydrauliques (4) sont des vérins à double effet (13) .

3. Véhicule (24) selon la revendication 1, **caractérisé en ce que**, la première zone de piston active (18) et la seconde zone de piston active (19) sont fournies par activation d'un nombre différent de vérins hydrauliques à simple effet (23).

4. Véhicule (24) selon l'une quelconque des revendications précédentes, **caractérisé en ce que**, les vérins hydrauliques (4) sont montés en parallèle.

5. Véhicule (24) selon l'une quelconque des revendications précédentes, **caractérisé en ce que**, une vanne de dérivation (14) est montée entre les vérins hydrauliques (4) et la pompe hydraulique (12), qui inverse le sens d'écoulement (15) du système hydraulique (11).

6. Véhicule (24) selon l'une quelconque des revendications précédentes, **caractérisé en ce que**, un clapet anti-retour (16) et un clapet de surpression (17) sont montés entre les vérins hydrauliques (4) et la pompe hydraulique (12) en parallèle entre au moins certains des vérins hydrauliques (4) et la pompe hydraulique (12).

7. Procédé pour la tension hydraulique d'un tendeur de chaîne (2) dans un véhicule (24), de préférence un véhicule agricole, tel qu'une épandeuse pour distribuer des matières épandables, telles que du fumier, comprenant une benne de camion (10) et un système hydraulique (11), comprenant
- des moyens destinés à être connectés à une pompe hydraulique (12),
- un moteur hydraulique (5) pour entraîner un dispositif de propulsion agencé au fond de la benne de camion (10), qui comprend au moins une chaîne de fond (1) avec des galets-tendeurs associés (3) et un dispositif de tension de chaîne (2) pour tendre la chaîne de fond (1) par l'intermédiaire d'un déplacement principalement linéaire d'au moins l'un des galets-tendeurs (3).
- un ou plusieurs vérins hydrauliques (4), qui font partie du dispositif de tension de chaîne (2), et qui avec un mouvement de piston dans une direction amènent la chaîne à se tendre, dans lequel le véhicule (24) a un premier mode de fonctionnement, dans lequel la chaîne de fond (1) a une première direction de fonctionnement (21) et un second mode de fonctionnement, dans lequel la chaîne de fond (1) a une seconde direction de fonctionnement (22), qui est contraire à la première direction de fonctionnement (21),
**caractérisé en ce que**,
le procédé comprend les étapes, dans lequel :
- une première force de tension est fournie dans le dispositif de tension de chaîne (2) avec une première zone de piston active (18) des vérins hydrauliques (4) dans le premier mode de fonctionnement,
- une seconde force de tension est fournie dans le tendeur de chaîne (2) avec une seconde zone de piston active (19), qui est différente de la première zone de piston active (18), dans le second mode de fonctionnement,

8. Procédé selon la revendication 7, **caractérisé en ce que**, le procédé comprend en outre les étapes suivantes, dans lequel :
- l'inversion du sens d'écoulement (15) dans le système hydraulique (11).

9. Procédé selon l'une quelconque des revendications 7 à 8 précédentes, **caractérisé en ce que**, la première zone de piston active (18) et la seconde zone de piston active (19) sont fournies à l'aide d'un ou plusieurs vérins hydrauliques à double effet (13).

10. Procédé selon l'une quelconque des revendications 7 à 9 précédentes, **caractérisé en ce que**, le procédé comprend en outre les étapes suivantes, dans lequel :
- une pression minimale est maintenue dans le dispositif de tension de chaîne (2) dans tous les modes de fonctionnement.
